# EUROPEAN PATENT SPECIFICATION

(11) **EP 2 361 957 B1**
(45) Date of publication and mention of the grant of the patent: **08.05.2013**
(21) Application number: 10075065.2
(22) Date of filing: 16.02.2010
(51) Int. Cl.: C09D 201/00, C09D 133/06, C08J 7/04

(54) **A protective coating preparation and a substrate protected by such preparation**
Schutzbeschichtungszubereitung und ein mit einer solchen Zubereitung geschütztes Substrat
Préparation de revêtement protecteur et substrat protégé par cette préparation

(43) Date of publication of application: 31.08.2011
(73) Proprietor: Hermadix Coatings B.V., 1430 AA Aalsmeer (NL)
(72) Inventor: Sjoerds, Erik Martin, 1507 JC Zaandam (NL); Avé, Willem Alexander, 1121 GM Landsmeer (NL)
(74) Representative: Prins, Hendrik Willem

(56) References cited:
- WO-A1-99/22588
- JP-A- 2010 018 663
- DATABASE WPI Week 199812 Thomson Scientific, London, GB; AN 1998-126185 XP002591617 & JP 10 007739 A (NIPPON PAINT CO LTD) 13 January 1998 (1998-01-13)

## Description

The present invention relates to a protective coating preparation, such as for a protective coating for a glass or plastic substrate, and to a substrate protected by such protective coating preparation.

A substrate, such as a glass, metal, plastic or concrete substrate, often require protection against environmental conditions, such as (sun) light, rain, humidity, temperature, graffiti and the like. Still it is often required that the protection is removable or renewable upon desire. The removal of the protective substrate should be relatively easy without the need of excessive mechanical force or impact, or of chemical removal agents that would negatively affect the properties (translucence) of the underlying substrate and/or interfere with the application of another protective layer.

The substrate may be a transparent substrate for use in green houses. Under such circumstances it is recommendable that the protective layer has substantially no negative impact on the green house environment when applied and/or removed. Furthermore, the transparency property should be adjusted as desired dependent on the pigment and/or filler used and may not be influenced by the conditions under which the protective layer is applied and/or removed.

Under all circumstances the binding strength of the applied coating preparation should be such that the coating remains intact and exhibits its protective properties during the intended period of use (in horticulture one or more harvest cycles).

EP 999,736 describes a protective coating preparation which is removable by the treatment with alkali. According to a preferred embodiment, the known prepration has a weight average molecular weight of 50,000 g/mol, an acid value of 60-160 and a polydispersity of 3-5. A polymer preparation explicitly disclosed comprises a polymer binder having an acid value of 73, an unknown average molecular weight and unknown polydispersity. A marketed protective coating preparation comprises a polymer having an acid value of 110, and an average molecular weight of about 25,000.

The present invention has for its object to provide a protective coating preparation which fulfills the above mentioned requirements and is furthermore relatively easy to remove but still has a good substrate binding strength. This is accomplished according to the invention with a protective coating preparation, such as for a protective coating for a glass substrate, comprising a binder, and a pigment and/or filler, wherein the binder is a polymer obtainable by anionic polymerization, and has an acid value of 100 to 200 a polydispersity of 1.2 to 5, and a weight average molecular weight of 5000 to 10,000.

Preferably, the acid value is in the range of 110 to 150. Preferably, the polydispersity is in the range of 1.5 to 4. Preferably, the weight average molecular weight is 6000 to 9000.

One of the essential features of the protective coating preparation is that the polymer binder is produced by an anionic polymerization process. Anionic polymerization proceeds via a mechanism which does not involve a formal termination step. Working under relatively clean and pure conditions and thus in the substantial absence of impurities, the carbanion via which the anionic polymerization proceeds, will remain active and capable of adding another monomer. The polymer chains will remain active indefinitely, unless there is inadvertent or deliberate termination or chain transfer. Thus, a polymer binder according to the invention will exhibit improved adhesive strength to the substrate, as the polymer chain may react and bind to the substrate. After binding to the substrate termination of the polymerisation has taken place and the chain will no longer be active.

Generally, in the anionic polymerization a polymerization initiator is to be used. Suitable initiators alkyl lithium compounds, such as n-butyl lithium, sec-butyl lithium. The amount of the initiator is not critical but is selected in dependency of the concentration of the monomer(s) and possible comonomers, and in relation to the intended weight average molecular weight. This weight average molecular weight of 5000 to 10,000 may be obtained by fast polymerization initiation aiming at the same time for an intended polydispersity. Accordingly, the polymerisation of essentially the growth of all polymer chains starts at the same time and continues up to the consumption of all available monomer. The polymer binder may comprise a homopolymer, a copolymer and also a polymer blend of homoplomer and copolymer. The weight average molecular weight is routinely determined by gel permeation chromatography.

Thus, polymers produced by anionic polymerization comprise polymer chains which are substantially of the same length and have a relatively low weight average molecular weight. In other words, the polydispersity index value close to 1, namely in the range of 1.2 to 5, and the weight average molecular weight is in the range of 5000 to 10,000. This means that the protective coating preparation comprises per unit weight a relatively large amount of uniform, relatively short polymer chains and thus a relatively larger amount of free active end groups (acid groups) available for binding to the substrate. Accordingly, the binding strength for the substrate will be relatively high, whereas the alkali removal (saponification) is relatively fast because of the uniform and short polymer chains.

The binding strength is furthermore optimized if the acid value is in the range of 110 to 150, more preferably in the range of 110 to 130, independently the polydispersity is in the range of 1.5 to 4 and more preferably in the range of 2 to 3, such as around 2. Finally, the weight average molecular weight is in the range of 6.000 to 9.000 and more preferably in the range of 7000 to 8500.

The best results are obtained with a polymer which is a (meth)acrylic polymer. This polymer may be a homopolymer of acrylic acid or methacrylic acid. Suitable are also copolymers of these both monomers. Possible other momomers are C2-C10 alkyl acrylate monomers, wherein the C2-C10 alkyl group may be straight or branched. Examples are butyl acrylate and 2 ethyl-hexyl acrylate. Such monomers which don not comprise unsaturated bonds, such as vinyl and aromatic double bonds, are less sensitive to degradation by radiation such as UV radiation, and therefore improve the UV stability of the preparation and of the applied coating.

Suitable other monomers are vinyl monomers, such as styrene, divinyl benzene, acrylonitril, acrylamide, vinyl acetate, and vinyl chloride. When to some extent cross linking is desired than suitable cross linking monomers are methylol (meth)acrylamides. They are useable in amounts upto about 2-5 wt%. However, (meth)acrylic monomers are preferred.

It is beneficial that the pH of the polymer binder is partially neutralized. This improves the the handling of the polymer and protective coating preparation as the use of personal protective is less stringent or not required. This furthermore allows the use of a standard preparative installation as it does not come into contact with highly acidic reaction media. Accordingly, it is preferred that the polymer binder or preparation is partially neutralized and has a pH of about 5-10, such as 6-8.5. Still the substrate binding properties are not substantially negatively affected.

After application to the substrate, the preparation should form a film coating on the substrate and binds as a film coating to the substrate. The handling and application of the preparation of the invention is improved and essentially applicable indoor and outdoor perennially when the polymer has a minimum film forming temperature of about 0°C to 10°C, preferably about 5 °C to 10 °C. Obviously, other environmental or local conditions, such as humidity, dew point temperature, substrate temperature and room temperature, are also determining the minimum temperature at which the preparation of the invention may still be applied.

It is preferred when the binder polymer has a glass temperature of more than 20°C, such as in the range of 25°C to 60°C, and preferably in the range of 30°C to 45°C. Thus, the glass temperature (Tg) is generally higher than the environmental temperature under which the preparation of the invention is applied to the substrate. Accordingly, the binder will transform into a solid, glass like coating material. It will exhibit an improved mechanical resistance such as under heavy rain conditions. Furthermore, there is a reduced risk for dirt adherence which improves light transmission and heat increasing properties. The glass temperature (T_{g}) of the polymer binder may be increased by using monomers and/or comonomers comprising longer and stiffer side- or endgroups, less flexible monomers, and to some extent increase the degree of cross linking. Such higher glass temperature (T_{g}) is advisable when the coating is used under (heavy) rain conditions. When used under only wet conditions and/or only water stability is required than a polymer binder with a lower glass temperature (T_{g}) may be used.

If the use of the protective coating requires UV stability or when the polymer binder is to absorb light in the ultraviolet region, it may breakdown due to the high energy absorbed. UV stability may be improved by the use of UV absorbers that will otherwise not negatively affect the properties of the coating. Examples of suitable UV absorbers are 2-(5-methyl-2-hydroxyphenyl) benzotriazole, 2-[2-hydroxy-3,5-bis(alpha,alpha-dimethylbenzyl)phenyl]-2H-benzotriazole, 2-(3,5-di-tert-butyl-2-hydroxyphenyl)benzotriazole, 2-(3-tert-butyl-5-methyl-2-hydroxyphenyl)-5-chlorobenzothiazole, 2-hydroxybenzophenone, 2-hydroxy-4-methoxybenzophenone, 2-hydroxy-4-octoxybenzophenone, 2,4-dihydroxybenzophenone, p-tert-butylphenyl salicylate, and p-octylphenyl salicylate. However, the UV stability may also be improved by using particular UV resistant monomers or comonomers, such as butyl acrylate and 2 ethyl-hexyl acrylate.

The light transparency may be adjusted by adding pigments or dyes. Effect particles may also be added. Examples are reflective beads. Interference pigments or fillers can be added to the mixture to provide photoselective shading paints with reflective and light-absorbance properties, which are important in applications in greenhouses to make tailor made light transmission possible in relation to certain spectral wavelength ranges from solar light. Various other effects can be achieved, such as addition of pearl pigments or ultraviolet light reflective pigments. With photoselective pigments/fillers there is the opportunity to increase the Photo Active Radiation (PAR) while intensifying the reduction of near infrared (NIR) Obviously, the extent of reflective or transmission properties can further be adjusted by the solid material content of the preparation which may be in the range of 30 to 60 wt%, preferably in the range of 35 to 50 wt%, such as 35 to 45 wt%. This solid material comprises for instance UV absorbers, photoselective pigments, and/or fillers. By selecting pigment and filler materials and their amounts light transparency and transmission may be adjusted in any desired manner. Selective reflection, scattering and transmission can be evaluated through laboratory spectral measurements

The viscosity of the polymer binder and preparation is generally in the range of about 5 to 20m.Pas, preferably in the range of 10 to 17mPas, such as 15mPas. Such low viscosity is beneficial for the handling and generally does not require the use of a viscosity lowering agent, such as cellulose derivatives, such as hydroxyethyl cellulose. Higher viscosities may be preferred for application other than by smearing or brushing, such as by spraying or atomizing.

The protective coating preparation generally comprises the polymer binder in an amount of 10 to 90wt% dependent on its composition, intended use and intended application method (spraying, brushing). It is preferred that the preparation comprises the polymer binder in an amount of 20 to 60wt% and more preferably in an amount of 30 to 50wt%, such as 40wt%.

After application, the protective coating of the invention has a sufficient substrate binding strength to withstand weathering conditions, such as (heavy) rain, moisture, low temperatures, heat and the like. Basically, the protective coating of this invention can be removed from the substrate by contact with alkaline solutions that preferably comprise also a surfactant for wetting and spreading. The alkali reacts with the polymer chains in the coating which will become removable. The remover composition generally comprises from 0.2 to 10% by weight of a metal alkali, such as sodium hydroxide and sodium metasilicate pentahydrate. A thickener, such as xanthan gum, a pH stabilizer, a defoamer, a corrosion inhibitor, a biocide, and an organic or inorganic solvent may also be present. The remover composition is brought into contact with the coating during a period of time, for instance ranging form some hours to some days. This means that the remover composition has been dried and then washed away together with the coating with water, such as by spraying or rainfall. An example of a remover preparation is as follows:

**Remover example:**

| Component: | % by weight |
|---|---|
| Water | 83.8 |
| Carbopol^{®} 751 | 1.0 |
| surfactant, non ionic ≥ C10 | 4.5 |
| hydroxide | 5.0 |
| defoamer | 1.0 |
| biocide | 0.2 |
| pH stabilizer | 4.5 |

As stated above, the protective coating of the invention is easy removed using an alkali solution. Suitable alkali solutions comprise sodium hydroxide, potassium hydroxide. The alkaline solutions comprise the base in an amount suitable for removal and handling and the amount is generally an amount of 1 to 10 wt%, such as 2 to 6wt%. The removal of the protective coating of the present invention is generally accomplished in a relatively short time period and without the need of excessive mechanical force. Thus, after contact with the alkaline solution the protective layer is removed fast.

An example of a protective coating preparation of the invention is as follows:

**Protective coating:**

| Component: | % by weight |
|---|---|
| Water | 37.1 |
| Defoamer | 0.3 |
| polymer thicker | 1.0 |
| acrylic polymer dispersion | 20.0 |
| biocide | 0.1 |
| filler | 40.0 |
| surfactant | 0.2 |
| defoamer | 0.3 |

For instance the protecting is removed from the substrate with about 0.1 to 2 M alkali in about 0.1 to 3 hours. In other words, after application of the alkali remover solution the removal is accomplished after a short and mild rain shower, or equivalent spraying.

Another aspect of the invention relates to a substrate, such as a glass substrate or plastic substrate. Conventionally types of plastics are for example polycarbonates, polyolefins, polyethylene terephthalate and polyesters.

Mentioned and other features of the protective coating preparation and protected substrate will be further illustrated by an embodiment which is given for information purposes only and are not intended to limit the invention to any extent.

### Example 1

A acrylic polymeric binder of the invention is produced by an anionic polymerisation process. The polymer is an acrylic polymer having a pH of 6,6, a Tg about 20-40°C, a minimum film forming temperature of equal or less than 10°C, a polydispersity of 2,3, an E-modulus of 330-950MPa, a total solids content of 40,4wt%, an weight average molecular weight of 7,900, an acid value of 110-115, and a viscosity of 15mPas.

This acrylic binder polymer is used in the protective coating preparation mentioned above and applied on a substrate.

The applied coating was subjected to an artificially accelerated weathering UV-test (QUV 323-02). In this test use is made of lamps:
- UV-A 340 nm (spectral area approx. 295 - 420 nm) ;
- UV-B 313 nm (spectral area approx. 270 - 390 nm).
The UV-A and UV-B lamps have a peak intensity of 340 nm and 313 nm respectively.
Colour is measured with a colour meter ICS/ACS colour computer. As test panels substrates of aluminium, glass, steel and wood can be used.

According to the test Q 323-02, the coated test panels are placed in a standard climate 23 ± 2°C and 50 ± 5% RH. The testing cycle comprises a standard cycle of 4 hours UV at 60±2°C / 4 hours condensation at 40±2°C (condensation without light). The irradiation intensity over the total spectrum is approx. 40W/m² for the UV-A 340 nm lamps and approx. 37 W/m² for the UV-B 313 nm lamps.
Drying and hardening of the test panels lasts for at least 16 hours at the same conditions. This method is in accordance with ASTM G 53.

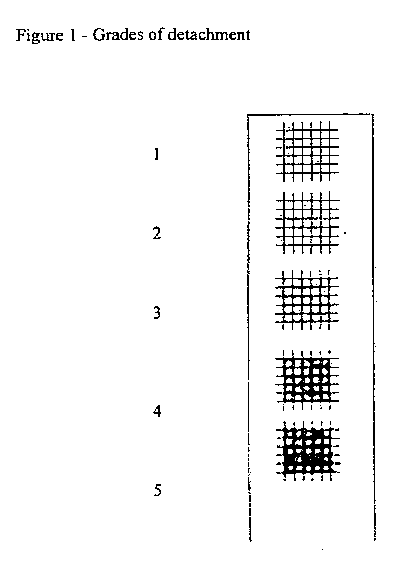

Subsequently, the test panels are subjected to a coating adhesion test. A lattice pattern is cut into the paint film on the substrate. The surface area, over which the paint film is detached from the substrate in between of the cuts, is evaluated by means of a comparison scale. The patterns are cut with a cutting tool (type snappy knife) with an undamaged edge at a cutting edge angle between 15 - 30°. The distance between the cut lines is dependent on the thickness of the coating (coating thickness < 60 µm, distance 1 mm; for 60 - 120 µm, distance 2 mm; and >120 µm, distance 3 mm. Adhesive tape is firmly pressed on the protective coating over the grid without air encapsulation. The adhesive tape is removed in one rapid movement at an angle of 90°.The test is based on the visual inspection of the appearance and number of vacant places in the grid on the substrate. The rating is as follows and is illustrated by the accompanying figure showing the grades of detachment.

Test rating (see figure):
0 The edges of the cuts are completely smooth; none of the squares of the lattice is detached.
1 Detachment of small flakes of the coating at the intersections of the cuts. A cross-cut area not significantly greater than 5% is affected.
2 The coating has flaked along the edges and/or at the intersections of the cuts. A cross-cut area significantly greater than 5%, but not significantly greater than 15%, is affected.
3 The coating has flaked along the edges of the cuts partly or wholly in large ribbons, and/or it has flaked partly or wholly on different parts of the squares. A cross-cut area significantly greater than 15%, but not significantly greater than 35%, is affected.
4 The coating has flaked along the edges of the cuts in large ribbons and/or some squares have detached partly or wholly. A cross-cut area significantly greater than 35%, but not significantly greater than 65%, is affected.
5 Any degree of flaking that cannot even be classified by classification 4.
This method is in accordance with ISO 2409.

### Example 2

Test results are given for the exemplified protective coating of the invention applied to a glass substrate in an amount of 1:2, and of the commonly used marketed product in an amount 1:2 (see EP-A 999,736). Rainfall was simulated as follows. Natural rains have dynamic intensities; thus, a large portion of total precipitation may be received during a short time. Natural rains also have both variable drop sizes and kinetic energy. The rain simulator design is capable of producing dynamic multiple intensities and corresponding multiple drop sizes to simulate variable kinetic energies. Thereto the rain test is producing rain with multiple and, dynamic intensities. The rain simulator provides realistic duplicated natural rain with a dynamically changing intensity of up to 200 mm h⁻¹ and kinetic energies ranging in accordance with the rain intensity. The results of the rain simulation test are as follows:

**Table 1 - Protective coating of the invention tested with removers and approx. 4-12 mm/m² rainfall simulation**

| Remover condition | Remover according to example 1 | Remover according to example 1 | Marketed alkali remover | Marketed alkali remover |
|---|---|---|---|---|
| | 1:4 dilution | 1:7 dilution | 1:4 dilution | 1:7 dilution |
| Wet remover | 2 seconds | 4 seconds | 3 seconds | 5 seconds |
| Dry remover | 4 seconds | 7 seconds | 9 seconds | 12 seconds |

**Table 2 - Marketed product as prepared in accordance with EP999,736 tested with removers and approx. 4-12 mm/m² rainfall simulation**

| Remover condition | Remover according to example 1 | Remover according to example 1 | Marketed alkali remover | Marketed alkali remover |
|---|---|---|---|---|
| | 1:4 dilution | 1:7 dilution | 1:4 dilution | 1:7 dilution |
| Wet remover | 4 seconds | 7 seconds | 9 seconds | 12 seconds |
| Dry remover | 8 seconds | 10 seconds | 15 seconds | 20 seconds |

The dilution was carried out with tap water. These results are an instantaneous sample. Outdoor weathering could influence the speed of removing the final product. Moreover, ageing of the final system occurs over time. The dilution of the final system at the moment of applying the alkali remover may alter the results.

These results show that the protective binder preparation of the invention has better adhesion and weathering properties over the marketed preparation. Still the protective coating of the invention was easily removed when desired using a standard remover solution.

## Claims

1. Protective coating preparationcomprising a binder, and a pigment and/or filler, wherein the binder is a polymer obtainable by anionic polymerization, and has an acid value of 100 to 200, a polydispersity of 1.2 to 5, and a weight average molecular weight of 5000 to 10000.

2. Preparation according to claim 1, wherein the polymer is a (meth)acrylic polymer.

3. Preparation according to claim 2, wherein the polymer is a copolymer comprising C2-C 10 alkyl acrylate monomers.

4. Preparation according to claim 1 - 3, wherein the preparation has a pH of 5-10.

5. Preparation according to claim 1 - 4, wherein the polymer has a minimum film forming temperature of 0 °C to 10 °C.

6. Preparation according to claim 1 - 5, wherein the polymer has a glas temperature of greater than 20 °C.

7. Preparation according to claim 1 - 6, wherein the binder is present in an amount of 10 - 90wt%,.

8. Preparation according to claims 1-7, wherein the weight average molecular weight is in the range of 6000 to 9000.

9. Preparation according to claim 1 - 7, comprising solid material in an amount of 30 - 60wt%.

10. Preparation according to claim 1-9, having a viscosity of 5 - 20mPas.

11. Preparation according to claim 1 - 10, removable from a protected substrate with 0.1 to 2 M alkali generally in 0.2 to 20 hours.

12. Substrateprotected by a protective coating preparation according to claim 1 - 11.

13. Use of the preparation according to any of the claims 1-11 for coating a substrate.

14. Use as claimed in Claim 13, wherein the substrate is outdoor applicable

15. Use as claimed in Claim 14, wherein the substrate is a transparant substrate for use in green houses.

## Patentansprüche

1. Schützendes Beschichtungspräparat umfassend ein Bindemittel und ein Pigment und/oder Füllstoff, wobei das Bindemittel ein Polymer ist, das durch anionische Polymerisation erhältlich ist und eine Säurezahl von 100 bis 200, eine Polydispersität von 1,2 bis 5 und ein mittleres Molekulargewicht von 5000 bis 10000 aufweist.

2. Präparat nach Anspruch 1, wobei das Polymer ein (Meth)acrylatpolymer ist.

3. Präparat nach Anspruch 2, wobei das Polymer ein Copolymer ist, das C2-C10 Alkylacrylatmonomere umfasst.

4. Präparat nach einem der Ansprüche 1-3, wobei das Präparat einen pH-Wert von 5-10 aufweist.

5. Präparat nach einem der Ansprüche 1-4, wobei das Polymer eine Mindesttemperatur bei der Filmbildung von 0 °C bis 10 °C aufweist.

6. Präparat nach einem der Ansprüche 1-5, wobei das Polymer eine Glastemperatur größer als 20 °C aufweist.

7. Präparat nach einem der Ansprüche 1-6, wobei das Bindemittel in einer Menge von 10-90 Gewichts-% vorhanden ist.

8. Präparat nach einem der Ansprüche 1-7, wobei das mittlere Molekulargewicht in dem Bereich von 6000 bis 9000 liegt.

9. Präparat nach einem der Ansprüche 1-7 umfassend festes Material in einer Menge von 30-60 Gewichts-%.

10. Präparat nach einem der Ansprüche 1-9 mit einer Viskosität von 5-20 mPas.

11. Präparat nach einem der Ansprüche 1-10, entfernbar von einem geschützten Substrat mit 0,1 bis 2 M Alkali im Allgemeinen in 0,2 bis 20 Stunden.

12. Substrat geschützt mit einem schützenden Beschichtungspräparat nach Anspruch 1-11.

13. Verwendung des Präparats nach einem der Ansprüche 1-11 zur Beschichtung eines Substrates.

14. Verwendung wie im Anspruch 13 beansprucht, wobei das Substrat im Freien verwendbar ist.

15. Verwendung wie im Anspruch 14 beansprucht, wobei das Substrat ein transparentes Substrat für die Verwendung in Treibhäusern ist.

## Revendications

1. Préparation de revêtement protecteur comprenant un liant, et un pigment et/ou une charge, dans laquelle le liant est un polymère pouvant être obtenu par polymérisation anionique et présente un indice d'acide de 100 à 200, une polydispersité de 1,2 à 5, et une masse moléculaire moyenne en masse de 5 000 à 10 000.

2. Préparation selon la revendication 1, dans laquelle le polymère est un polymère (méth)acrylique.

3. Préparation selon la revendication 2, dans laquelle le polymère est un copolymère comprenant des monomères acrylates d'alkyle en C₂ à C₁₀.

4. Préparation selon les revendications 1 à 3, laquelle préparation a un pH de 5 à 10.

5. Préparation selon les revendications 1 à 4, dans laquelle le polymère a une température minimale de formation de film de 0°C à 10°C.

6. Préparation selon les revendications 1 à 5, dans laquelle le polymère a une température de transition vitreuse supérieure à 20°C.

7. Préparation selon les revendications 1 à 6, dans laquelle le liant est présent en une quantité de 10 à 90 % en poids.

8. Préparation selon les revendications 1 à 7, dans laquelle la masse moléculaire moyenne en masse est située dans la plage allant de 6 000 à 9 000.

9. Préparation selon les revendications 1 à 7, comprenant un matériau solide en une quantité de 30 à 60 % en poids.

10. Préparation selon les revendications 1 à 9, ayant une viscosité de 5 à 20 mPa.s.

11. Préparation selon les revendications 1 à 10, pouvant être retirée d'un substrat protégé avec un alcali 0,1 à 2 M généralement en 0,2 à 20 heures.

12. Substrat protégé par une préparation de revêtement protecteur selon les revendications 1 à 11.

13. Utilisation de la préparation selon l'une quelconque des revendications 1 à 11, pour revêtir un substrat.

14. Utilisation selon la revendication 13, dans laquelle le substrat est applicable à l'extérieur.

15. Utilisation selon la revendication 14, dans laquelle le substrat est un substrat transparent pour une utilisation dans des serres.
